**Europäisches Patentamt**

**European Patent Office**

**Office européen des brevets**

(19)

(11) Veröffentlichungsnummer: **0 131 945**
**B1**

(12) **EUROPÄISCHE PATENTSCHRIFT**

(45) Veröffentlichungstag der Patentschrift:
**05.10.88**

(51) Int. Cl.⁴: **G 01 N 15/00**, G 01 N 27/00

(21) Anmeldenummer: **84108339.7**

(22) Anmeldetag: **16.07.84**

(54) Verfahren zur Unterscheidung von in einem Medium befindlichen Teilchen oder Partikeln.

(30) Priorität: **18.07.83  DE 3325860**

(43) Veröffentlichungstag der Anmeldung:
**23.01.85 Patentblatt 85/4**

(45) Bekanntmachung des Hinweises auf die Patenterteilung:
**05.10.88 Patentblatt 88/40**

(84) Benannte Vertragsstaaten:
**CH FR GB LI**

(56) Entgegenhaltungen:
**Z. NATURFORSCHUNG, 37c, 1982, Seiten 908-915; W.M. ARNOLD et al.: "Rotating-field-induced rotation and measurement of the membrane capacitance of single mesophyll cells of Avena sativa"**

(73) Patentinhaber: **Kernforschungsanlage Jülich Gesellschaft mit beschränkter Haftung, Postfach 1913, D-5170 Jülich 1 (DE)**

(72) Erfinder: **Arnold, William Michael, Adalbertstrasse 116-118, D-5100 Aachen (DE)**
Erfinder: **Zimmermann, Ulrich, Prof., Röntgenstrasse 11, D-8700 Würzburg (DE)**

## Beschreibung

Die Erfindung bezieht sich auf ein Verfahren zur Unterscheidung von in einem Medium befindlichen, um eine zur Drehachse eines elektrischen Drehfeldes parallele Drehachse rotierbaren, wenigstens zwei Teilchen- oder Partikelgruppen zugehörenden Teilchen bzw. Partikeln (insbesondere Zellen), bei dem die Teilchen oder Partikeln einem elektrischen Drehfeld variabler Drehfrequenz ausgesetzt werden.

Ein derartiges Verfahren ist aus Z. Naturforsch. 37 c, 908–915 (1982), "Rotating-Field-Induced Rotation and Measurement of the Membrane Capacitance of Single Mesophyll Cells of Avena sativa", W.M. Arnold und U. Zimmermann, bekannt. Einzelne Zellen, hier Protoplasten, werden in einem elektrischen Drehfeld, das beispielsweise von vier jeweils um 90° versetzt angeordneten Elektroden ausgeht, in Rotation gebracht. Ausserdem können einzelne Zellen einer bestimmten Zellart bei einer bestimmten Frequenz des Drehfeldes (der sog. charakteristischen Frequenz) in maximale Rotationsgeschwindigkeit versetzt werden.

Bei Anwendung des bekannten Verfahrens können somit Zellen, für die unterschiedliche, charakteristische Drehfrequenzen für die jeweilige maximale Rotationsgeschwindigkeit massgeblich sind, dadurch voneinander unterschieden werden, dass die Frequenz des Drehfeldes auf die für eine Zellgruppe charakteristische Frequenz eingestellt wird. Die unterschiedlichen Zellen können dann an ihrer unterschiedlichen Rotationsgeschwindigkeit voneinander unterschieden werden.

Bei dieser Verfahrensweise kann jedoch im Einzelfall die Unterscheidung aufgrund der unterschiedlichen Rotationsgeschwindigkeit recht schwierig sein, so dass nur ein geübtes Auge den Unterschied zu erkennen vermag.

Es ist Aufgabe der Erfindung, ein Verfahren der eingangs bezeichneten Art zu schaffen, das die Unterscheidung von Teilchen aufgrund deren Rotationsverhalten gegenüber dem vorgenannten Unterscheidungsverfahren für das Bedienungspersonal erleichtert, wobei das Verfahren auch auf Teilchen nichtbiologischer Art anwendbar sein soll.

Diese Aufgabe wird gemäss der Erfindung dadurch gelöst, dass die Frequenz des Drehfeldes auf eine Frequenz eingestellt wird, bei die zu unterscheidenden Teilchen mit unterschiedlichem Drehsinn rotieren.

Das Verfahren gemäss der Erfindung basiert auf der Feststellung, dass Teilchen bzw. Partikeln, auch Zellen, in einem elektrischen Drehfeld nicht nur in der gleichen Drehrichtung wie das elektrische Drehfeld rotieren, sondern je nach ihren spezifischen, das Rotationsverhalten bestimmenden Eigenschaften gegebenenfalls auch mit einem entgegen der Drehrichtung des elektrischen Drehfeldes gerichteten Drehsinn in Rotation versetzt werden können.

Wie sich gezeigt hat, gibt es eine Vielzahl von Teilchen, beispielsweise Zellen der Saccharomyces cerevisiae (strain 93), die zwar in einem weiten Frequenzbereich des Drehfeldes, jedoch nicht im gesamten Frequenzbereich im gleichen Drehsinn wie das Drehfeld rotieren. Da dieses Rotationsverhalten, d.h. die Lage der Bereiche mit unterschiedlichem Drehsinn von den spezifischen Eigenschaften der Teilchen abhängt, ist es auf einfache Weise möglich, Teilchen bzw. Partikeln, beispielsweise zweier Gruppen, die ein unterschiedliches Rotationsverhalten der vorgenannten Art aufweisen, voneinander zu unterscheiden. Dazu ist es lediglich notwendig, die Frequenz des Drehfeldes solange zu variieren, bis die zu unterscheidenden Teilchen mit jeweils entgegengesetztem Drehsinn rotieren.

Das Verfahren gemäss der Erfindung ist einem weiten Bereich der Technik anwendbar, beispielsweise, wo es um die Unterscheidung von Teilchen eines Pulvers geht und optische Methoden, so die Untersuchung unter dem Mikroskop, nicht hinreichend sind. So kann es beispielsweise von Interesse sein, $BaTiO_3$-Partikeln von infolge des Herstellungsverfahrens für $BaTiO_3$ ebenfalls vorhandenen $TiO_2$-Teilchen zu unterscheiden und eine Abschätzung des %-Anteils von $TiO_2$-Teilchen in einer Charge vornehmen zu können. Dies ist deshalb leicht möglich, da $BaTiO_3$-Teilchen in einem weiten Frequenzbereich unter der Einwirkung eines elektrischen Feldes mit anderer Drehrichtung rotieren als $TiO_2$-Teilchen.

Im biologischen, pharmakologischen und medizinischen Bereich ist es von Interesse, Zellen voneinander zu unterscheiden. Beispielsweise dann, wenn Zellen eine Zellwand aufweisen, wie pflanzliche Zellen, Hefezellen und Baktrien und – bei gleicher Grösse der Zellen – die Zellen trotz sonstiger Unterschiede unter dem Mikroskop nicht zu unterscheiden sind. So können beispielsweise eine Zellwand aufweisende Zellen der gleichen Art und Gattung auch dann unter dem Mikroskop nicht unterschieden werden, wenn ihre Membran durch Detergentien, Umweltschadstoffe, wie Schwermetalle, u.dgl. geschädigt worden ist. Bei nicht zu geringer Schädigung in der Membran der Zellen unterscheiden sich geschädigte Zellen – in bestimmten Frequenzbereichen – durch Rotation in zur Drehrichtung nichtgeschädigter Zellen entgegengesetzter Drehrichtung. Die geschädigten Zellen können daher von den nichtgeschädigten Zellen aufgrund ihres anderen Rotationsverhaltens unterschieden werden. Auch können beispielsweise lebende von toten Zellen der gleichen Art anhand ihres Rotationsverhaltens unterschieden werden.

Das Rotationsverhalten der Teilchen ist zwar, wie für eine bestimmte Zellart, von weiteren Parametern abhängig, so von den Umgebungsbedingungen für die Teilchen, der Leitfähigkeit des Mediums, in welchem sich die Teilchen befinden, und der Temperatur des Mediums. Für eine Unterscheidungsmessung kommt es jedoch nur auf das unterschiedliche Rotationsverhalten der zu unterscheidenden Teilchen bei sonst gleichen Umgebungsbedingungen an. Die Leitfähigkeit des Mediums, die zweckmässigerweise in einem Bereich von 5 bis 500 μS/cm, insbesondere 5 bis 50 μS/cm liegt, ist daher für die Unterscheidung der Teilchen selbst nur von untergeordneter Bedeutung. Bei zu unterscheidenden Zellen ist die Temperatur des Mediums in erster Linie danach einzustellen, dass die Zellfunktionen nicht beeinträchtigt und die Zellen nicht geschädigt werden.

Zur Durchführung des Verfahrens gemäss der Erfindung ist eine Vorrichtung geeignet, bei der mindestens drei Elektroden, die, zwischen sich einen Zwischenraum für eine die Zellen enthaltende Kammer oder einen Behälter bildend oder in die zur Aufnahme der Zellen vorgesehene Kammer hineinragend, derart angeordnet sind, dass der Kammer- bzw. Behälterraum einem von den Elektroden ausgehenden elektrischen Drehfeld ausgesetzt ist, sowie durch eine an die Elektroden anschliessbare Einrichtung zur Erzeugung eines Drehfeldes variabler Drehfrequenz. Zweckmässigerweise ist dabei auch die Intensität des Drehfeldes variabel. Sie sollte dabei in einem solchen Bereich liegen, dass in der Kammer elektrische Feldstärken von etwa 1 bis 1000 V/cm erzielt werden. Der Frequenzbereich sollte im Bereich zwischen 1 Hz und 1 GHz liegen. In vielen Anwendungsfällen genügt jedoch ein Bereich von 1 Hz bis 500 kHz.

Bei der Durchführung des Verfahrens gemäss der Erfindung ist eine Intensität zu wählen, die unterhalb der elektrischen Durchbruchspannung für die zu behandelnden Zellen liegt.

Wie sich gezeigt hat, ist es ausserdem zweckmässig, wenn die das Drehfeld erzeugenden elektrischen Spannungen sinusförmig sind. Es ist jedoch auch möglich, das Drehfeld durch rechteckförmige Spannungen oder durch pulsweise abgegebene Spannungen oder Spannungen einer anderen Form zu erzeugen.

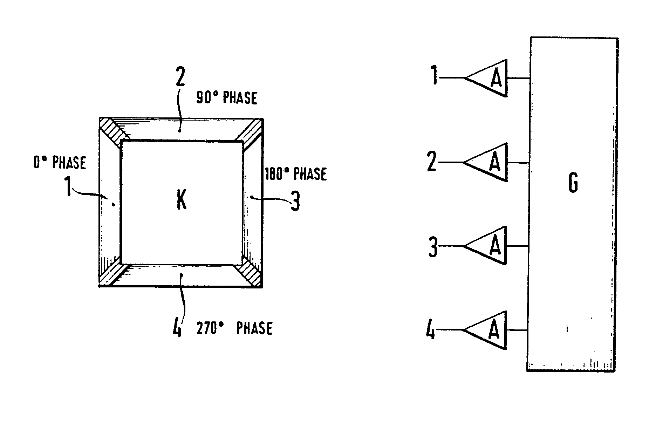

In der Zeichnung ist beispielsweise eine Ausführungsform der Vorrichtung, mit der das Verfahren gemäss der Erfindung durchgeführt werden kann, schematisch dargestellt und wird im folgenden näher erläutert:

Es sind vier Elektroden vorgesehen, die auf einer in der Zeichnung nicht dargestellten Grundplatte aus elektrisch nicht leitendem Material so angeordnet sind, dass sie die seitlichen Wände der zur Aufnahme der Zellen vorgesehenen Kammer K bilden. Die Elektroden sind an den Ecken der Kammer miteinander und an der Grundplatte mittels eines elektrisch isolierenden Klebemittels verklebt. Die Elektrodenlänge und damit die Länge der Seitenwände der Kammer beträgt 1 mm, die Höhe der Elektroden 0,2 mm. Die quadratische, nach oben offene Kammer K hat somit das Seitenmass von 1 mm und die Höhe von 0,2 mm. Die aus einer Platinfolie bestehenden Elektroden sind in der aus der Zeichnung ersichtlichen Reihenfolge mit den Verstärkern V des Generators G verbunden. Die von den Verstärkern ausgehenden Spannungen sind – wie ebenfalls aus der Zeichnung ersichtlich ist – um jeweils 90° phasenverschoben, wodurch in der Kammer ein elektrisches Drehfeld erzeugt wird.

Ausführungsbeispiel 1
Unterscheidung nichtbiologischer Teilchen

Ein aus $BaTiO_3$ und $TiO_2$ bestehendes Teilchengemisch (der mittlere Durchmesser der Teilchen betrug 2 μm) wurde in destilliertem Wasser fünfmal gewaschen und dann in Wasser gegeben, das Spuren von NaCl enthielt (Leitfähigkeit 2,6 μS/cm, Temperatur 20 °C).

Etwa 10 μl der das Teilchengemisch enthaltenden Lösung wurde in die Rotationskammer gegeben. Die Teilchen konnten in einem Frequenzbereich von 5 bis 150 kHz an ihrer unterschiedlichen Drehrichtung unterschieden werden. Während die $BaTiO_3$-Teilchen mit dem elektrischen Drehfeld rotierten, rotierten die $TiO_2$-Teilchen entgegengesetzt zur Drehrichtung des elektrischen Feldes.

Zu bemerken ist, dass $BaTiO_3$ eine Dielektrizitätskonstante von 2000, $TiO_2$ dagegen von etwa 100 aufweist.

Ausführungsbeispiel 2
Unterscheidung nichtbiologischer Teilchen

Entsprechend Ausführungsbeispiel 1 wurde ein Gemisch von $BaTiO_3$ und $TiO_2$-Teilchen untersucht.

Die Leitfähigkeit der das Gemisch enthaltenden Lösung betrug 5,2 μS/cm.

Die Teilchen rotierten im Frequenzbereich von 10 bis 300 kHz mit jeweils entgegengesetzter Drehrichtung.

Ausführungsbeispiel 3
Unterscheidung von lebenden oder toten Hefezellen

Zellen von Saccharomyces cerevisiae (strain 93) wurden aus einem Nährmedium in destilliertes Wasser gegeben. Ein Teil der Hefezellen wurde für 5 Minuten auf 85 °C erhitzt. Sie wurden anschliessend zentrifugiert und gewaschen.

Eine Fraktion der erhitzten Hefezellen wurde mit den unbehandelten Hefezellen gemischt. Unter dem Mikroskop war ein Unterschied nicht zu erkennen.

Das Gemisch wurde in eine Lösung gegeben, deren Leitfähigkeit 2 μS/cm betrug. Die Temperatur betrug 20 °C.

Etwa 10 μl der das Zellgemisch enthaltenden Lösung wurde in die Rotationskammer gegeben.

Die Zellen rotierten in einem weiten Frequenzbereich, so auch bei etwa 100 kHz mit unterschiedlicher Drehrichtung. Dabei rotierten die lebenden Zellen entgegen der Drehrichtung und die toten Zellen mit der Drehrichtung des elektrischen Feldes.

Ausführungsbeispiel 4
Unterscheidung von durch ein Detergenz geschädigter Zellen von nicht geschädigten Zellen

In einer aus destilliertem Wasser bestehenden Ausgangslösung befanden sich Zellen von Saccharomyces cerevisiae (strain 93). Ein Teil derselben wurde für eine Stunde in eine Lösung gegeben, die 0,09% HDTAB (Hexadexyltrimethylammoniumbromid) enthielt. Die Zellen wurden danach zentrifugiert und viermal in destilliertem Wasser gewaschen.

Es wurde eine Mischung aus behandelten und unbehandelten Zellen hergestellt (die Leitfähigkeit der Lösung betrug 2 µS/cm, die Temperatur 20°C). Die Zellen waren unter dem Mirkoskop nicht zu unterscheiden.

Eine Untersuchung in der Rotationskammer ergab ein unterschiedliches Rotationsverhalten der beiden Zellengruppen.

Schon bei 20 Hz konnten die Zellen unterschieden werden, da die nichtgeschädigten Zellen mit dem Drehfeld rotierten, die geschädigten Zellen nicht rotierten.

Bei 40 kHz rotierten die Zellen mit unterschiedlicher Drehrichtung, wobei die geschädigten Zellen mit dem Drehfeld und die nicht geschädigten Zellen in Gegenrichtung zum Drehfeld rotierten.

Ausführungsbeispiel 5

Unterscheidung von durch einen Umweltschadstoff geschädigten Zellen von nicht geschädigten Zellen

Von der in Ausführungsbeispiel 4 angegebenen Ausgangslösung wurde ein Teil der Zellen für eine Stunde in eine Lösung gegeben, die 100 ppm $HgCl_2$ enthielt. Nach dem Zentrifugieren der Zellen und viermaligem Waschen wurde wieder eine Mischung behandelter und nichtbehandelter Zellen hergestellt. Die Leitfähigkeit der das Gemisch enthaltenden Lösung betrug 2 µS/cm, die Temperatur 20°C. Ein Unterschied der im Gemisch befindlichen Zellen war unter dem Mikroskop nicht zu erkennen.

Eine Untersuchung in der Rotationskammer ergab ein unterschiedliches Rotationsverhalten der beiden Zellengruppen.

Schon bei 20 Hz konnten die Zellen unterschieden werden, da die nichtgeschädigten Zellen mit dem Drehfeld rotierten, die geschädigten Zellen nicht rotierten.

Bei 50 kHz rotierten die Zellen mit unterschiedlicher Drehrichtung, wobei die geschädigten Zellen mit dem Drehfeld und die nichtgeschädigten Zellen in Gegenrichtung zum Drehfeld rotierten.

Ausführungsbeispiel 6

Unterscheidung von Hefezellen zweier verschiedener Gattungen

Es wurde ein Gemisch von Hefezellen Saccharomyces cerevisiae (strain 93) und Hansenula II (unbekannte Art) hergestellt. Unter dem Mikroskop konnten die beiden Zellgruppen nur mit Schwierigkeit voneinander unterschieden werden.

Das Zellgemisch wurde in destilliertes Wasser gegeben (Leitfähigkeit 2 µS/cm, Temperatur 20°C).

Die Zellen konnten durch ihr Rotationsverhalten voneinander unterschieden werden. Bei 30 kHz rotierten die Zellen der Saccharomyces cerevisiae (strain 93) entgegen der Drehrichtung des elektrischen Feldes, wogegen die Zellen Hansenula II langsam im Drehsinn des elektrischen Drehfeldes rotierten.

**Patentanspruch**

Verfahren zur Unterscheidung von in einem Medium befindlichen, um eine zur Drehachse eines elektrischen Drehfeldes parallele Drehachse rotierbaren, wenigstens zwei Teilchen- oder Partikelgruppen zugehörenden Teilchen oder Partikeln, in dem die Teilchen oder Partikeln einem elektrischen Drehfeld variabler Drehfrequenz ausgesetzt werden, dadurch gekennzeichnet, dass die Frequenz des Drehfeldes auf eine Frequenz eingestellt wird, bei der die zu unterscheidenden Teilchen oder Partikeln mit unterschiedlichem Drehsinn rotieren.

**Claim**

Method for distinguishing particles which are present in a medium, which are rotatable about an axis of rotation parallel to the axis of rotation of an electrical rotating field and which belong to at least two particle groups, the particles being subjected to an electrical rotating field of variable rotational frequency, characterised in that the frequency of the rotating field is adjusted to a frequency at which the particles which are to be distinguished rotate in differing directions of rotation.

**Revendication**

Procédé pour distinguer des particules ou des fragments se trouvant dans un milieu, susceptibles de tourner par rapport à un axe parallèle à l'axe de rotation d'un champ électrique tournant et appartenant à au moins deux groupes de fragments ou de particules, qui consiste à soumettre les fragments ou les particules à un champ électrique tournant de fréquence de rotation variable, caractérisé en ce qu'il consiste à régler la fréquence du champ tournant à une valeur pour laquelle les fragments ou les particules à distinguer tournent avec des sens de rotation différents.

2

90° PHASE

0° PHASE

1

K

180° PHASE

3

4  270°  PHASE

1  A

2  A

3  A

4  A

G